# EUROPÄISCHE PATENTSCHRIFT

(11) **EP 3 322 600 B1**
(45) Veröffentlichungstag und Bekanntmachung des Hinweises auf die Patenterteilung: **08.09.2021**
(21) Anmeldenummer: 16738414.8
(22) Anmeldetag: 12.07.2016
(51) Int. Cl.: B60D 1/36, B60D 1/62

(54) **VERFAHREN UND VORRICHTUNG ZUM ANKUPPELN EINES KRAFTFAHRZEUGS AN EINEN ANHÄNGER**
METHOD AND DEVICE FOR COUPLING A MOTOR VEHICLE TO A TRAILER
PROCÉDÉ ET DISPOSITIF POUR RELIER UN VÉHICULE À MOTEUR À UNE REMORQUE

(30) Priorität: 16.07.2015 DE 102015213404
(43) Veröffentlichungstag der Anmeldung: 23.05.2018
(73) Patentinhaber: Continental Teves AG & Co. OHG, 60488 Frankfurt am Main (DE)
(72) Erfinder: OPITZ, Christian, 30826 Garbsen (DE)
(74) Vertreter: Continental Corporation
(86) Internationale Anmeldenummer: PCT/EP2016/066523
(87) Internationale Veröffentlichungsnummer: WO 2017/009330

(56) Entgegenhaltungen:
- WO-A2-2015/005795
- GB-A- 2 513 393
- US-A1- 2009 236 825
- US-A1- 2010 013 188

## Beschreibung

Die Erfindung betrifft ein Verfahren zum Ankuppeln eines Anhängers an ein Kraftfahrzeug.

Kraftfahrzeuge werden derzeit vermehrt mit Umfeldsensorik ausgestattet, welche in der Lage ist, Objekte im Umfeld des Fahrzeugs zu erkennen. Die Daten solcher Umfeldsensoren können dazu verwendet werden, automatische Manöver des Fahrzeugs zu planen und durchzuführen. Solche Verfahren sind bspw. aus Einparkassistenten bekannt.

Ähnlich wie automatische Einparksysteme sind auch Assistenzsysteme zum Ankuppeln eines Anhängers an ein Fahrzeug bekannt.

Gerade bei Dunkelheit oder schlechtem Wetter, besonders wenn der Fahrer alleine ist, kann es für einen Fahrer schwierig bzw. unkomfortabel sein, zum Ankuppeln eines Anhängers geeignet zu rangieren und den Anhänger anzukuppeln. Oftmals ist es nötig, mehrmals aus dem Fahrzeug ein- und auszusteigen und ein zielgenaues Rangiermanöver verlangt einiges an Geschick vom Fahrer. Zudem kann der Anhänger je nach Ausführung und Beladungszustand sehr unhandlich sein. Eine Assistenzfunktion, die Teile des Manövers oder auch das ganze Manöver teil- oder vollautomatisch übernimmt, verringert die Wahrscheinlichkeit von Kollisionen und stellt einen großen Komfortgewinn für den Fahrer dar.

Aus der DE 103 02 545 A1 ist ein Verfahren zum automatischen Ankuppeln bzw. Andocken mittels Bildsensorik bekannt. Dabei wird die Kupplung eines Anhängers durch einen Objekterkennungsalgorithmus detektiert. Anschließend kann ein autonomes Koppelmanöver durchgeführt werden, wobei der notwendige Einschlagwinkel des Lenkrads und die Geschwindigkeit zum Heranführen an die Kupplung des Anhängers berechnet werden.

Aus der DE 10 2012 005 707 A1 ist ein Verfahren bekannt, bei dem eine Kamera an Bord des Kraftfahrzeugs einen Zugkopf eines Anhängers als Rangierziel erfasst und das Fahrzeug teil- oder vollautomatisch in eine zum Ankuppeln geeignete Position rangiert. Der Fahrer kann hierbei darüber informiert werden, wenn der Zugkopf der Anhängerdeichsel niedriger ist als der Kugelkopf der Anhängervorrichtung, so dass der Fahrer die Anhängerdeichsel anheben kann. Ein Nachteil besteht darin, dass Höhenverstellungen der Anhängerdeichsel durch den Fahrer erfolgen müssen. Der Fahrer muss also unter Umständen mehrmals aus dem Fahrzeug ein- und aussteigen, was unkomfortabel und eventuell zeitaufwändig ist. Zudem kann die Höhenverstellung der Anhängerdeichsel je nach Ausführung des Anhängers und Beladungszustand ebenfalls schwierig, zeitaufwändig oder unkomfortabel sein.

Aus der US 2010/013188 A1 und der GB 2 513 393 A1 sind Verfahren zum Ankuppeln eines Kraftfahrzeugs mit einer Anhängerkupplung an ein Kupplungselement eines Anhängers bekannt. Bei diesem wird mittels geeigneter Umfeldsensorik die Position des Anhängers erkannt und das Fahrzeug autonom an den Anhänger heranmanövriert. Das mit einem Luftfedersystem ausgestatte Fahrzeug wird dabei derart abgesenkt, dass die Anhängerkupplung unterhalb des Kupplungselements positioniert werden kann. Anschließend erfolgt durch den Fahrzeugbediener ein manuelles Herabsenken des Anhängers samt Kupplungselement auf die.

In der US 2009/236825 A1 wird ein semiautonomes Verfahren zum Ankuppeln eines Kraftfahrzeuges mit einer Anhängerkupplung an ein Kupplungselement eines Anhängers beschrieben, bei welchem der Fahrzeugbediener in einer Videoanzeige Hilfslinien eingeblendet bekommt, wobei der Fahrzeugbediener das Kraftfahrzeug entlang eines vorgeschlagenen Fahrwegs selbständig in eine Position steuert, in welcher die Anhängerkupplung entlang dem Kupplungselement ausgerichtet ist.

Aufgabe der vorliegenden Erfindung ist es also, ein Verfahren zum teil- oder vollautomatischen Ankuppeln von Anhängern zu verbessern bzw. komfortabler und/oder zeitsparender zu gestalten.

Diese Aufgabe wird erfindungsgemäß durch ein Verfahren nach Anspruch 1 sowie einer Vorrichtung nach Anspruch 9 gelöst.

Weitere vorteilhafte Weiterbildungen der Erfindung sind in den Unteransprüchen beschrieben.

Der Erfindung liegt der Gedanke zugrunde, einen Ankuppelvorgang teilweise oder ganz zu automatisieren, indem mittels des im Fahrzeug enthaltenen Luftfedersystems dazu geeignete Höhenänderungen ausgeführt werden. Daten betreffend das Umfeld des Fahrzeugs, die mittels einer Umfeldsensorik erfasst werden, werden dabei ausgewertet, um die geeignete Ansteuerung zu bestimmen. Durch die Auswertung der Umfeldsensorikdaten, kombiniert mit der Ansteuerung des Luftfedersystems, wird eine weitgehend automatisierte und dadurch komfortable Durchführung des Ankuppelvorgangs ermöglicht.

Es erfolgt unter Verwendung der durch die Umfeldsensorik ermittelten Daten eine Überprüfung, ob sich die Anhängerkupplung des Kraftfahrzeugs im Vergleich zum Kupplungselement des Anhängers in einer zum Ankuppeln geeigneten Höhe befindet.

Unter einer zum Ankuppeln geeigneten Höhe der Anhängerkupplung des Kraftfahrzeugs wird dabei vorteilhafterweise die Höhe verstanden, in der die Anhängerkupplung unter das Kupplungselement des Anhängers passt, so dass die Anhängerkupplung durch Rangieren von Fahrzeug und/oder Anhänger senkrecht unter das Kupplungselement des Anhängers gebracht werden kann. Die Höhe des Kupplungselements des Anhängers wird dabei besonders bevorzugt von der Umfeldsensorik erfasst.

Zudem erfolgt ein automatisiertes Rangieren in eine Position, in der sich das Kupplungselement des Anhängers über (vorteilhafterweise im Wesentlichen senkrecht über) der Anhängerkupplung des Kraftfahrzeugs befindet, wenn die Überprüfung ergeben hat, dass sich das Anhängerkupplung des Kraftfahrzeugs im Vergleich zum Kupplungselement des Anhängers in einer zum Ankuppeln geeigneten Höhe befindet. Ein automatisiertes Rangieren hat den Vorteil, dass das Assistenzsystem aufgrund der erfassten Umfelddaten das Kraftfahrzeug sehr präzise positionieren kann, so dass die Anhängerkupplung des Kraftfahrzeugs sehr genau unter dem Kupplungselement des Anhängers zu stehen kommt. Zudem besteht bei einer manuellen Durchführung des Manövers durch den Fahrer durch die oft eingeschränkte Sicht auf Anhängerkupplung und Kupplungselement sowie die notwendige Nähe des Kraftfahrzeugs zum Anhänger eine erhöhte Kollisionsgefahr, welche durch die automatische Durchführung des Manövers verringert wird.

Nach Erreichen der Position, in der sich das Kupplungselement des Anhängers über der Anhängerkupplung des Kraftfahrzeugs befindet, erfolgt die gesteuerte Höhenänderung an zumindest einer Achse derart, dass die Anhängerkupplung des Kraftfahrzeugs in das Kupplungselement des Anhängers eingreift. Erfindungsgemäß erfolgt die gesteuerte Höhenänderung dabei durch eine Nickbewegung des Fahrzeugs, wobei die Hinterachse mittels des Luftfedersystems angehoben wird.

Eine Nickbewegung wird dadurch hervorgerufen, dass eine gesteuerte Höhenänderung an der Hinterachse nach oben erfolgt, während die Höhe an der anderen Achse unverändert bleibt oder aber in die entgegengesetzte Richtung geändert wird. Eine solche Bewegung ist als besonders vorteilhaft anzusehen, da auf diese Weise eine möglichst große Höhenänderung der Anhängerkupplung des Kraftfahrzeugs, welche sich üblicherweise am hinteren Ende des Fahrzeugs befindet, mit kleinen Änderungen an den Achsenhöhen erwirkt wird.

Nach einer Ausführungsform der Erfindung erfolgt zusätzlich eine Höhenänderung an der Vorderachse.

Nach einer vorteilhaften Ausführungsform der Erfindung erfolgt aufgrund der Auswertung der Daten der Umfeldsensorik ein automatisiertes Rangieren des Kraftfahrzeugs in eine Ausgangsposition in der Nähe des Anhängers. Eine Überprüfung der Höhen des Kupplungselements des Anhängers und der Anhängerkupplung des Kraftfahrzeugs erfolgt dann, wenn das Kraftfahrzeug sich in dieser Ausgangsposition befindet. Dies hat den Vorteil, dass die Überprüfung der Höhen genauer erfolgen kann.

Die Ausgangsposition wird dabei vorteilhafterweise so bestimmt, dass die Anhängerkupplung des Fahrzeugs in unmittelbarer Nähe des Kupplungselements des Anhängers ist, so dass die Anhängerkupplung des Fahrzeugs und das Kupplungselementes des Anhängers weniger als eine vorgegebene Distanz voneinander entfernt sind.

Nach einer weiteren vorteilhaften Ausführungsform erfolgt eine Überprüfung der Höhen der Anhängerkupplung des Fahrzeugs und des Kupplungselementes des Anhängers sowohl direkt nach Auslösen des Verfahrens als auch nach Erreichen der Ausgangsposition.

In einer besonders bevorzugten Ausführungsform des erfindungsgemäßen Verfahrens wird die geeignete Höhe der Anhängerkupplung des Kraftfahrzeugs so bestimmt, dass der höchste Punkt der Anhängerkupplung des Kraftfahrzeugs mindestens um einen festgelegten Wert niedriger ist als der niedrigste Punkt des Kupplungselements des Anhängers.

Besonders bevorzugt erfolgt eine gesteuerte Höhenänderung an zumindest einer Achse, wenn sich die Anhängerkupplung des Kraftfahrzeugs im Vergleich zum Kupplungselement des Anhängers nicht in einer zum Ankuppeln geeigneten Höhe befindet.

Bevorzugt wird das Verfahren durch Eingabe des Fahrers an einer Schnittstelle ausgelöst. Besonders bevorzugt handelt es sich bei der Schnittstelle um einen Taster.

Nach einer Ausführungsform der Erfindung wird nach Auslösung durch den Fahrer das Verfahren unabhängig vom Fahrer durchgeführt.

Alternativ dazu ist eine Ausführungsform bevorzugt, in der der Fahrer einzelne Verfahrensschritte durch Eingabe auslösen kann.

Bevorzugt erfolgt eine Fehlermeldung an den Fahrer, wenn die Überprüfung, ob sich das Anhängerkupplung des Kraftfahrzeugs im Vergleich zum Kupplungselement des Anhängers in einer zum Ankuppeln geeigneten Höhe H befindet, ergeben hat, dass sich die Anhängerkupplung des Kraftfahrzeugs im Vergleich zum Kupplungselement des Anhängers nicht in einer zum Ankuppeln geeigneten Höhe befindet und eine gesteuerte Höhenänderung an zumindest einer Achse nicht derart erfolgen kann, dass die Anhängerkupplung in eine geeignete Höhe H gebracht wird. Dies kann beispielsweise der Fall sein, wenn die technische Auslegung der Luftfederung es nicht erlaubt, eine geeignete Höhe an der Achse oder den Achsen einzustellen oder wenn die Einstellung der Höhe einen vorgegebenen Sicherheits-Grenzwert verletzen würde.

Erfindungsgemäß werden Sicherheits-Grenzwerte für die Höheneinstellung an den Achsen vorgegeben. Dies dient dazu, ein Schleifen des Fahrzeugs über den Boden, insbesondere Unebenheiten des Bodens, oder eine Kollision mit Unebenheiten oder niedrigen Hindernissen, die normalerweise überfahren werden können (bspw. Bordsteinkanten) zu verhindern. Dabei sind erfindungsgemäß unterschiedliche Sicherheits-Grenzwerte vorgesehen in Abhängigkeit davon, ob das Fahrzeug im Stillstand ist oder bewegt wird und welche Strecke im Falle eines automatischen Rangierens zurückgelegt werden soll. Sicherheits-Grenzwerte können zusätzlich oder alternativ dazu in Abhängigkeit der Informationen, die mittels der Umfeldsensorik über die Beschaffenheit des Bodens vorliegen (bspw. eingeteilt in Kategorien: ebener Boden, unebener Boden, Hindernisse vorhanden) festgelegt werden.

Weiter erfolgt bevorzugt eine Fehlermeldung an den Fahrer, wenn ein automatisiertes Rangieren in eine nächste vom Verfahren vorgesehene Position nicht erfolgen kann. Dies kann beispielsweise der Fall sein, wenn keine geeignete Trajektorie zum automatischen Rangieren berechnet werden kann, weil z.B. kein ausreichender Platz zur Verfügung steht oder durch die Umfeldsensorik Hindernisse zwischen Kraftfahrzeug und Anhänger erkannt wurden.

Die Durchführung des Verfahrens kann je nach Ausführungsform von einem eigens dafür vorgesehenen Regler oder durch einen bereits bestehenden Regler erfolgen. Dabei können für einzelne Verfahrensschritte auch zusätzlich im Fahrzeug vorhandene Regler angesteuert werden.

Vorteilhafterweise wird bei Kraftfahrzeugen, die einen Einparkassistenten enthalten, eine Positionsvorgabe an den Einparkassistenten übermittelt, welcher das Fahrzeug in die vorgegebene Position rangiert.

Die Erfindung betrifft auch ein Steuergerät, in dem ein erfindungsgemäßes Verfahren durchgeführt wird.

Weitere bevorzugte Ausführungsformen der Erfindung ergeben sich aus der nachfolgenden Beschreibung anhand von Figuren, sowie aus den Figuren selbst.

Dabei zeigt:
Fig. 1: eine schematische Darstellung einzelner beispielhafter Verfahrensabschnitte,
Fig. 2: ein schematisches Ablaufdiagramm eines beispielhaften Verfahrens.

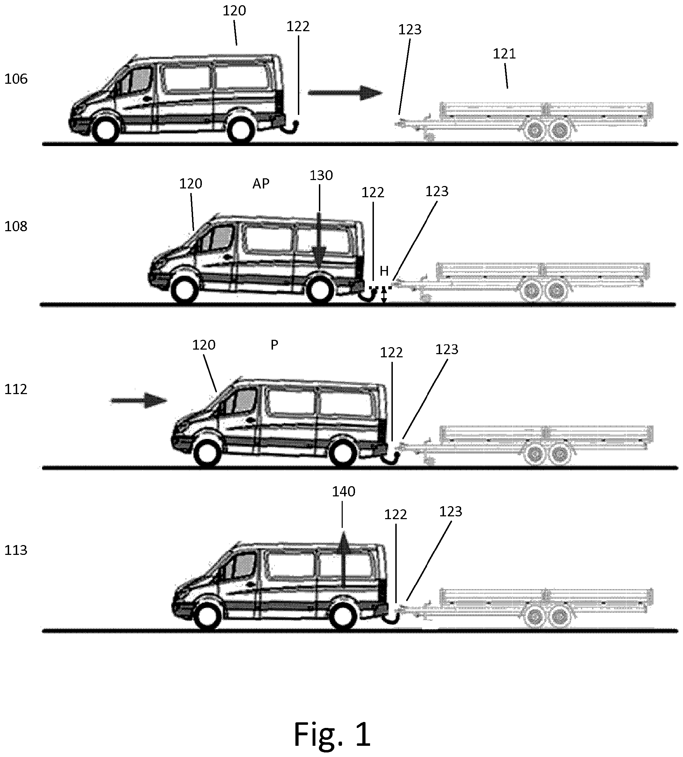

In Fig. 1 sind einzelne Abschnitte eines beispielgemäßen Verfahrens anhand von schematischen Zeichnungen des Fahrzeugs und des Anhängers veranschaulicht. Es ist ein Kraftfahrzeug 120 samt einer Anhängerkupplung 122 gezeigt, sowie ein Anhänger 121 mit einem Kupplungselement 123. Pfeile zeigen Bewegungen des Kraftfahrzeugs an.

In Verfahrens-Abschnitt 106 wird Kraftfahrzeug 120 automatisiert in eine Ausgangsposition AP in der Nähe des Anhängers rangiert.

In Verfahrens-Abschnitt 108 befindet sich Fahrzeug 120 in der Ausgangsposition AP. Die Hinterachse wird durch das Luftfedersystem abgesenkt (angedeutet durch Pfeil 130), so dass die Anhängerkupplung 122 sich auf einer Höhe H über dem Boden befindet. Dabei ist die Höhe H so bestimmt, dass der höchste Punkt der Anhängerkupplung 122 unterhalb des niedrigsten Punktes des Kupplungselements 123 ist.

In Verfahrens-Abschnitt 112 wird Fahrzeug 120 automatisch in eine Ankuppelposition P rangiert, so dass Anhängerkupplung 122 sich im Wesentlichen senkrecht unter Kupplungselement 123 befindet.

In Verfahrens-Abschnitt 113 wird die Hinterachse durch das Luftfedersystem wieder angehoben (angedeutet durch Pfeil 140), so dass Anhängerkupplung 122 in Kupplungselement 123 eingreift.

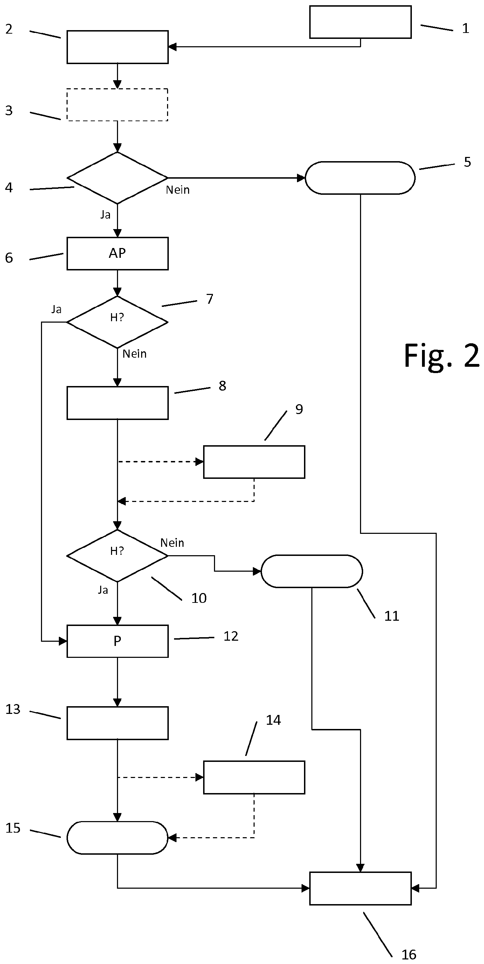

Ein Verfahrensablauf nach einem Ausführungsbeispiel der Erfindung ist in Fig. 2 gezeigt. Das Verfahren zum Ankuppeln eines Kraftfahrzeuges an einen Anhänger beginnt beispielsgemäß in Block 1 durch eine Eingabe des Fahrers an einer Schnittstelle, z.B. durch Betätigung eines Tasters.

Anschließend führt ein Steuergerät in dem gezeigten Ausführungsbeispiel das Verfahren automatisch durch. Dabei können verschiedene Regelsysteme und Aktuatoren des Fahrzeugs angesteuert werden. Es können dabei beispielsweise fahrerunabhängige Eingriffe in zumindest eines der folgenden Systeme erfolgen: Lenkung, Bremsen (einzeln oder als Gesamtbremsung), Antrieb, Luftfedersystem.

In Block 2 wird mittels einer im Fahrzeug angeordneten Umfeldsensorik eine Überwachung der Umgebung durchgeführt. Anhand der Daten wird erkannt, ob sich ein Anhänger in der Nähe befindet und wo sich der Anhänger und das zugehörige Kupplungselement befinden. Um Fehlansteuerungen zu vermeiden, wird vorteilhafterweise die erkannte Position des Kupplungselements des Anhängers vom Fahrer bestätigt. Beispielsweise kann dies erfolgen, indem der erkannte Anhänger und das erkannte Kupplungselement visuell dargestellt und markiert werden. Der Fahrer bestätigt dann durch Eingabe, dass das gewünschte Ziel für den Ankuppelvorgang korrekt erkannt wurde.

Bei Kraftfahrzeugen mit ausklappbarer Anhängerkupplung wird im optionalen Block 3 ein automatisches Ausklappen der Anhängerkupplung des Kraftfahrzeugs durchgeführt.

In Block 4 wird anschließend eine geeignete Trajektorie für das Kraftfahrzeug berechnet, um das Kraftfahrzeug automatisiert in eine Ausgangsposition AP in der Nähe des Anhängers zu rangieren. In Block 4 wird weiter geprüft, ob ausreichend Platz zum rangieren verfügbar ist. Ist dies nicht der Fall (Nein in Block 4), so erfolgt in Block 5 eine Fehlermeldung an den Fahrer.

Ist das Ergebnis der Überprüfung in Block 4 positiv (Ja), so rangiert das Fahrzeug in Block 6 selbsttätig in die Ausgangsposition (AP).

Anschließend wird in Block 7 mittels Daten der Umfeldsensorik bewertet, ob sich die Anhängerkupplung des Kraftfahrzeugs im Vergleich zum Kupplungselement des Anhängers in einer zum Ankuppeln geeigneten Höhe H befindet.

Ist das Ergebnis positiv (Ja in Block 7), so wird das Fahrzeug direkt in eine Ankuppelposition P rangiert (Block 12). Dies ist die Position, in der sich die Anhängerkupplung des Kraftfahrzeugs im Wesentlichen senkrecht unter dem Kupplungselement des Anhängers befindet.

Ergibt die Überprüfung in Block 7, dass sich die Anhängerkupplung des Kraftfahrzeugs im Vergleich zum Kupplungselement des Anhängers nicht in einer zum Ankuppeln geeigneten Höhe H befindet (Nein in Block 7), so wird in Block 8 mittels des Luftfedersystems die Hinterachse des Kraftfahrzeugs abgesenkt. Optional wird in Block 9 zusätzlich mittels des Luftfedersystems die Vorderachse des Kraftfahrzeugs angehoben, um die Anhängerkupplung des Kraftfahrzeugs weiter abzusenken.

Anschließend wird in Block 10 erneut überprüft, ob sich die Anhängerkupplung des Kraftfahrzeugs im Vergleich zum Kupplungselement des Anhängers in einer zum Ankuppeln geeigneten Höhe H befindet. Ist dies noch immer nicht der Fall (Nein in Block 10), so erfolgt eine Fehlermeldung (Block 11) an den Fahrer und das Verfahren wird beendet (Block 16).

Der Fahrer hat nun bspw. die Möglichkeit, manuell die Höhe des Kupplungselementes der Anhängerkupplung zu verändern und das Verfahren durch Eingabe neu zu beginnen oder fortzusetzen.

Ergibt die Überprüfung der Höhen der Anhängerkupplung des Kraftfahrzeugs und des Kupplungselements des Anhängers in Block 10, dass sie sich in zum Ankuppeln geeigneten Höhen befinden (Ja in Block 10), so wird das Fahrzeug in Block 12 in Ankuppelposition P rangiert.

Nach Erreichen der Ankuppelposition P, in der sich die Anhängerkupplung des Kraftfahrzeugs unter dem Kupplungselement des Anhängers befindet, wird in Block 13 die Hinterachse mittels des Luftfedersystems wieder angehoben. Optional wird in Block 14 die Vorderachse wieder abgesenkt. Durch Anheben der Hinterachse und ggf. Absenken der Vorderachse greift die Anhängerkupplung des Kraftfahrzeugs in das Kupplungselement des Anhängers ein und der Anhänger ist eingekuppelt.

In Block 15 wird an den Fahrer gemeldet, dass der Ankuppelvorgang erfolgreich durchgeführt wurde. Das Verfahren wird in Block 16 beendet.

Der Fahrer kann anschließend die weiteren üblichen Schritte zum Abschließen des Ankuppelvorgangs vornehmen, wie bspw. die elektrische Verbindung herstellen und die Handbremse des Anhängers lösen. In einer bevorzugten Ausführungsform der Erfindung werden diese Schritte teilweise oder ganz, je nach Ausstattung des Anhängers, ebenfalls automatisch vorgenommen.

## Patentansprüche

1. Verfahren zum Ankuppeln eines Kraftfahrzeugs (120) mit einer Anhängerkupplung (122) an ein Kupplungselement (123) eines Anhängers (121) unter zumindest teilweise automatischer Ansteuerung des Kraftfahrzeugs anhand von mittels Umfeldsensorik, insbesondere Umfeldsensorik des Kraftfahrzeugs, erfassten Daten, wobei eine gesteuerte Höhenänderung an zumindest einer Achse mittels eines Luftfedersystems des Kraftfahrzeugs anhand der erfassten Daten durchgeführt wird (8, 9, 13, 14, 140), wobei unter Verwendung der durch die Umfeldsensorik ermittelten Daten eine Überprüfung (7, 10) erfolgt, ob sich die Anhängerkupplung (122) des Kraftfahrzeugs im Vergleich zum Kupplungselement (123) des Anhängers in einer zum Ankuppeln geeigneten Höhe (H) befindet, wobei ein automatisiertes Rangieren (12, 112) in eine Position (P) erfolgt, in der sich das Kupplungselement (123) des Anhängers über der Anhängerkupplung (122) des Kraftfahrzeugs befindet, wenn die Überprüfung ergeben hat, dass sich die Anhängerkupplung des Kraftfahrzeugs im Vergleich zum Kupplungselement des Anhängers in einer zum Ankuppeln geeigneten Höhe (H) befindet, **dadurch gekennzeichnet, dass** Sicherheits-Grenzwerte für eine Höheneinstellung an den Achsen vorgegeben werden, wobei unterschiedliche Sicherheits-Grenzwerte vorgesehen sind in Abhängigkeit davon, ob das Fahrzeug im Stillstand ist oder bewegt wird und welche Strecke im Falle eines automatischen Rangierens zurückgelegt werden soll, und dass nach Erreichen der Position (P), in der sich das Kupplungselement des Anhängers über der Anhängerkupplung des Kraftfahrzeugs befindet, die gesteuerte Höhenänderung durch eine Nickbewegung des Fahrzeugs erfolgt, wobei die Hinterachse mittels des Luftfedersystems angehoben wird, so dass die Anhängerkupplung (122) des Kraftfahrzeugs in das Kupplungselement (123) des Anhängers eingreift.

2. Verfahren nach Anspruch 1, **dadurch gekennzeichnet, dass** zusätzlich eine Höhenänderung an der Vorderachse erfolgt (14).

3. Verfahren nach Anspruch 2, **dadurch gekennzeichnet, dass** die Vorderachse abgesenkt wird.

4. Verfahren nach einem der vorhergehenden Ansprüche, **dadurch gekennzeichnet, dass** eine gesteuerte Höhenänderung an zumindest einer Achse erfolgt (8,9,108), wenn sich die Anhängerkupplung (122) des Kraftfahrzeugs im Vergleich zum Kupplungselement (123) des Anhängers nicht in einer zum Ankuppeln geeigneten Höhe (H) befindet.

5. Verfahren nach Anspruch 4, **dadurch gekennzeichnet, dass** eine Fehlermeldung an den Fahrer erfolgt, wenn die Überprüfung ergeben hat, dass sich die Anhängerkupplung (122) des Kraftfahrzeugs im Vergleich zum Kupplungselement (123) des Anhängers nicht in einer zum Ankuppeln geeigneten Höhe (H) befindet und eine gesteuerte Höhenänderung an zumindest einer Achse nicht derart erfolgen kann, dass die Anhängerkupplung (122) in eine geeignete Höhe (H) gebracht wird.

6. Verfahren nach einem der vorhergehenden Ansprüche, **dadurch gekennzeichnet, dass** aufgrund der Auswertung der Daten der Umfeldsensorik ein automatisiertes Rangieren des Kraftfahrzeugs in eine Ausgangsposition (AP) in der Nähe des Anhängers erfolgt, und eine Überprüfung der Höhen des Kupplungselements (123) des Anhängers und der Anhängerkupplung (122) des Kraftfahrzeugs dann erfolgt, wenn das Kraftfahrzeug sich in der Ausgangsposition (AP) befindet.

7. Verfahren nach Anspruch 6, **dadurch gekennzeichnet, dass** eine Fehlermeldung an den Fahrer erfolgt, wenn ein automatisiertes Rangieren die vom Verfahren vorgesehene Ausgangsposition (AP) nicht erfolgen kann (5).

8. Verfahren nach einem der vorhergehenden Ansprüche, **dadurch gekennzeichnet, dass** das Verfahren durch eine Eingabe des Fahrers ausgelöst wird (1) und nach Auslösung durch den Fahrer unabhängig vom Fahrer oder teilweise unabhängig vom Fahrer durchgeführt wird.

9. Steuergerät für ein Kraftfahrzeug, welches zur Ansteuerung zumindest eines Luftfedersystems des Kraftfahrzeugs ausgebildet ist und welchem Daten einer Umfeldsensorik zugeführt werden, **dadurch gekennzeichnet, dass** in diesem ein Verfahren nach einem der vorhergehenden Ansprüche durchgeführt wird.

## Claims

1. Method for coupling a motor vehicle (120) by means of a trailer coupling (122) to a coupling element (123) of a trailer (121) with at least partially automatic actuation of the motor vehicle use data which is acquired by means of a surroundings sensor system, in particular surroundings sensor system of a motor vehicle, wherein a controlled change in height on at least one axle is carried out by means of an air suspension system of the motor vehicle using the acquired data (8, 9, 13, 14, 140), wherein the data which is obtained by means of the surroundings sensor system is used to carry out checking (7, 10) as to whether the trailer coupling (122) of the motor vehicle is, in comparison with the coupling element (123) of the trailer, at a height (H) which is suitable for coupling wherein automated manoeuvring (12, 122) occurs into a position (P) in which the coupling element (123) of the trailer is above the trailer coupling (122) of the motor vehicle if the checking has revealed that the trailer coupling of the motor vehicle is, in comparison with the coupling element of the trailer, at a height (H) which is suitable for coupling, **characterized in that** safety limiting values for a vertical adjustment are specified on the axles, wherein different safety limiting values are provided in accordance with whether the vehicle is in a stationary state or is moving and what distance is to be covered in the case of automatic manoeuvring, and **in that** after the position (P) at which the coupling element of the trailer is above the trailer coupling of the motor vehicle has been reached, the controlled change in height is carried out by means of a pitching movement of the vehicle, wherein the rear axle is raised by means of the air suspension system so that the trailer coupling (122) of the motor vehicle engages in the coupling element (123) of the trailer.

2. Method according to Claim 1, **characterized in that** a vertical adjustment additionally occurs at the front axle (14).

3. Method according to Claim 2, **characterized in that** the front axle is lowered.

4. Method according to one of the preceding claims, **characterized in that** a controlled change in height occurs at at least on axle (8, 9, 108) if the trailer coupling (122) of the motor vehicle is, in comparison with the coupling element (123) of the trailer, not at a height (H) which is suitable for coupling.

5. Method according to Claim 4, **characterized in that** a fault message is issued to the driver if the checking has revealed that the trailer coupling (122) of the motor vehicle is, in comparison with the coupling element (123) of the trailer not at a height (H) which is suitable for coupling and a controlled change in height such that the trailer coupling (122) is moved to a suitable height (H) cannot occur at at least one axle.

6. Method according to one of the preceding claims, **characterized in that** on the bases of evaluation of the data of the surrounding sensor system, automated manoeuvring of the motor vehicle occurs into an initial position (AP) in the vicinity of the trailer, and checking of the height of the coupling element (123) of the trailer and of the trailer coupling (122) of the motor vehicle occurs when the motor vehicle is in the initial position (AP).

7. Method according to Claim 6, **characterized in that** a fault message is issued to the driver if automated manoeuvring cannot occur (5) the initial position (AP) provided by the method.

8. Method according to one of the preceding claims, **characterized in that** the method is triggered (1) by an input by the driver, and after triggering by the driver said method is carried out independently of the driver or partially independently of the driver.

9. Control unit for a motor vehicle which is designed to actuate at least one air suspension system of the motor vehicle and to which data of a surroundings sensor system is fed, **characterized in that** a method according to one of the preceding claims is carried out in said air suspension system.

## Revendications

1. Procédé permettant d'atteler un véhicule automobile (120) doté d'un attelage de remorque (122) à un élément d'accouplement (123) d'une remorque (121) avec un pilotage au moins partiellement automatique du véhicule automobile à l'aide de données détectées par un système de capteurs d'environnement, en particulier un système de capteurs d'environnement du véhicule automobile, une variation de hauteur commandée sur au moins un essieu étant effectuée au moyen d'un système de suspension pneumatique du véhicule automobile à l'aide des données détectées (8, 9, 13, 14, 140), dans lequel, en utilisant les données établies par le système de capteurs d'environnement, une vérification (7, 10) est effectuée pour savoir si l'attelage de remorque (122) du véhicule automobile se trouve en comparaison avec l'élément d'accouplement (123) de la remorque à une hauteur (H) adaptée à l'opération d'attelage, des manœuvres automatisées (12, 112) étant effectuées vers une position (P) dans laquelle l'élément d'accouplement (123) de la remorque se trouve au-dessus de l'attelage de remorque (122) du véhicule automobile si le résultat de la vérification indique que l'attelage de remorque du véhicule automobile se trouve en comparaison avec l'élément d'accouplement de la remorque à une hauteur (H) adaptée à l'opération d'attelage,
**caractérisé en ce que** des valeurs limites de sécurité sont prédéfinies pour un réglage de la hauteur sur les essieux, différentes valeurs limites de sécurité étant prévues en fonction du fait que le véhicule est à l'arrêt ou en mouvement et du trajet à parcourir dans le cas de manœuvres automatiques, et **en ce qu'**une fois la position (P) atteinte dans laquelle l'élément d'accouplement de la remorque se trouve au-dessus de l'attelage de remorque du véhicule automobile, la variation de hauteur commandée est effectuée par un mouvement de tangage du véhicule, l'essieu arrière étant relevé au moyen du système de suspension pneumatique de telle sorte que l'attelage de remorque (122) du véhicule automobile vient en prise avec l'élément d'accouplement (123) de la remorque.

2. Procédé selon la revendication 1, **caractérisé en ce qu'**en outre une variation de hauteur est effectuée sur l'essieu avant (14).

3. Procédé selon la revendication 2, **caractérisé en ce que** l'essieu avant est abaissé.

4. Procédé selon l'une quelconque des revendications précédentes, **caractérisé en ce qu'**une variation de hauteur commandée est effectuée sur au moins un essieu (8, 9, 108) si l'attelage de remorque (122) du véhicule automobile, en comparaison avec l'élément d'accouplement (123) de la remorque, ne se trouve pas à une hauteur (H) adaptée à l'opération d'attelage.

5. Procédé selon la revendication 4, **caractérisé en ce qu'**un message d'erreur est adressé au conducteur si le résultat de la vérification indique que l'attelage de remorque (122) du véhicule automobile, en comparaison avec l'élément d'accouplement (123) de la remorque, ne se trouve pas à une hauteur (H) adaptée à l'opération d'attelage, et une variation de hauteur commandée ne peut pas être effectuée sur au moins un essieu de telle sorte que l'attelage de remorque (122) est amené à une hauteur adaptée (H).

6. Procédé selon l'une quelconque des revendications précédentes, **caractérisé en ce qu'**en raison de l'évaluation des données du système de capteurs d'environnement, des manœuvres automatisées du véhicule automobile vers une position de départ (AP) à proximité de la remorque sont effectuées, et une vérification de la hauteur de l'élément d'accouplement (123) de la remorque et de l'attelage de remorque (122) du véhicule automobile est effectuée lorsque le véhicule automobile se trouve dans la position de départ (AP).

7. Procédé selon la revendication 6, **caractérisé en ce qu'**un message d'erreur est adressé au conducteur si des manœuvres automatisées vers la position de départ (AP) prévue par le procédé ne peuvent pas être effectuées (5).

8. Procédé selon l'une quelconque des revendications précédentes, **caractérisé en ce que** le procédé est déclenché par une entrée du conducteur (1), et après le déclenchement par le conducteur, il est effectué indépendamment du conducteur ou en partie indépendamment du conducteur.

9. Appareil de commande destiné à un véhicule automobile, qui est réalisé pour piloter au moins un système de suspension pneumatique du véhicule automobile et auquel des données d'un système de capteurs d'environnement sont amenées, **caractérisé en ce qu'**un procédé selon l'une quelconque des revendications précédentes est effectué sur celui-ci.
